# FASCICULE DE BREVET EUROPEEN

(11) **EP 2 075 194 B1**
(45) Date de publication et mention de la délivrance du brevet: **16.08.2017**
(21) Numéro de dépôt: 07150441.9
(22) Date de dépôt: 27.12.2007
(51) Int. Cl.: F01D 25/02, F02C 7/14, B64D 15/02, F02C 7/047

(54) **Echangeur de chaleur air-huile pour turboréacteur, turboréacteur associé et utilisation dudit échangeur**
Luft-Öl-Wärmetauscher für ein Turbostrahltriebwerk, zugehöriges Turbostrahltriebwerk und Benutzung dieses Wärmetauschers
Air-oil heat exchanger for a turbojet, corresponding turbojet and use of said heat exchanger

(43) Date de publication de la demande: 01.07.2009
(73) Titulaire: Techspace Aero, 4041 Milmort Herstal (BE)
(72) Inventeur: Bajusz, Denis, 1030 Schaerbeek (BE); Cornet, Albert, 4800 Verviers (BE); Friedel, Jérôme, 77115 Blandy Les Tours (FR); Raimarckers, Nicolas, 4263 Tourinne (Braives) (BE)
(74) Mandataire: Cardy, Sophie Marie

(56) Documents cités:
- EP-A- 1 760 291
- EP-A- 1 895 141
- FR-A- 2 859 500

## Description

L'invention concerne un échangeur air-huile pour le refroidissement de l'huile moteur et/ou d'un équipement installé dans le moteur (équipements électriques, boîtes d'engrenage ou autres), et qui est disposé sur la virole intérieure de la veine secondaire d'un turboréacteur, de préférence à l'emplacement du bec séparateur d'air.

L'invention se rapporte également à un turboréacteur comportant un tel échangeur air-huile.

Le bec séparateur d'air situé en aval de la soufflante permet de séparer le flux d'air primaire s'écoulant dans la veine primaire du flux d'air secondaire s'écoulant dans la veine secondaire.

Dans une turbomachine, différents organes et équipements doivent être lubrifiés et/ou refroidis, la chaleur générée étant généralement transportée par des systèmes d'huile et évacuée par des échangeurs carburant-huile et/ou air-huile. Ces derniers consistent à amener un flux d'air forcé sur une surface d'échange additive du circuit d'huile.

Pour réaliser le refroidissement à l'air de l'huile des échangeurs air-huile (« *ACOC»),* il existe des solutions d'alimentation en air par écopes ou par piquage du flux d'air. Cependant, outre un accroissement de la traînée de l'avion dans le cas d'une écope externe au moteur, la perturbation aérodynamique imposée au flux d'air par le piquage induit une diminution du rendement global du moteur.

Un tel échangeur air-huile est toutefois dorénavant indispensable en tant que système de refroidissement complémentaire de l'huile du circuit moteur, qui vient compléter le refroidissement opéré par les échangeurs huile-carburant. En effet, il existe une génération de plus en plus importante de calories dans les moteurs actuels, notamment dans les emplacements suivants :
- enceintes de roulements ou enceintes de paliers qui sont soumises à des sollicitations mécaniques de plus en plus importantes,
- boîtes d'engrenages intégrant des hautes puissances,
- l'intégration de nouvelles machines électriques de haute puissance, en particulier des démarreurs-générateurs ou S/G (pour "Starter/Generator") qui servent à alimenter électriquement la turbomachine, le PPS (Power Plant System, c'est à dire le moteur et sa nacelle) et/ou l'avion, et permettent, dans certaines configurations, le démarrage du moteur.

Pour minimiser les pertes de performance liées à l'intrusion de l'ACOC ou de son écope dans la veine moteur, on a recours aujourd'hui à des échangeurs de surface, qui présentent moins d'obstacle aérodynamique dans la veine, le débit d'air pouvant s'établir de manière naturelle. Cependant leur installation peut conduire à des contraintes d'intégration aux parois de veine (carters, capots de nacelle), ou réduire les surfaces utiles de traitement acoustique. Il est donc nécessaire d'optimiser la localisation et les fonctions de ces échangeurs.

Il est connu du document US3797561 ou FR2110172 d'utiliser, pour refroidir l'huile de l'échangeur, un réservoir annulaire situé à l'intérieur de la partie arrière du bec séparateur d'air et dont les parois délimitent des canaux annulaires intérieurs et extérieurs en contact avec les parois du bec séparateur le long desquelles circule l'air provenant du conduit de la soufflante, et permettant de refroidir l'huile circulant dans ces canaux. Une telle solution ne permet pas de dégivrer le bec séparateur, ni d'optimiser la performance aéro-thermique de l'échangeur.

On note que dans le cas du document CA2471259, le bec de la nacelle est équipé d'un conduit annulaire de circulation d'huile logé dans la nacelle qui, à la fois, assure le refroidissement de l'huile et empêche le givrage du bec de la nacelle. Une telle solution serait toutefois insuffisante en termes de capacité de refroidissement d'huile si elle était mise en oeuvre dans le bec séparateur.

Un système de dégivrage du bec séparateur est décrit dans le document US6561760. Le système de dégivrage décrit dans ce document utilise de l'air chaud provenant des parties chaudes du moteur. L'inconvénient de ce type de solution est qu'il induit une perte de rendement liée au
prélèvement d'air et représente une masse supplémentaire.

Le document EP 1 895 141, faisant partie de l'état de la technique selon l'article 54(3) CBE, présente un bec séparateur à paroi creuse à l'avant duquel circule de l'huile, dans le but de refroidir cette huile et de réchauffer les parois du bec séparateur ; des raidisseurs sont disposés à l'avant et à l'extérieur de la paroi supérieure du bec séparateur.

Le document EP 1 760 291 divulgue l'art antérieur le plus proche.

La présente invention a pour objectif de fournir un échangeur air-huile permettant de subvenir aux besoins en refroidissement du circuit d'huile du turboréacteur, tout en prévenant le givrage du bec séparateur et sans perturber de façon sensible le flux d'air.

A cet effet, la présente invention est définie par les revendications adjointes.

De cette manière, on comprend que l'échangeur air-huile est disposé au niveau de la virole intérieure de la veine secondaire, dans une zone s'étendant de la partie avant du bec séparateur jusqu'aux bras de maintien.

De préférence, l'échangeur air-huile est disposé au niveau de la partie avant du bec séparateur.

Ainsi, notamment par l'intégration du circuit d'huile à l'intérieur du bec séparateur, on utilise un espace disponible tout en minimisant les perturbations du flux d'air par les ailettes.

Les ailettes recevant le flux d'air secondaire dans sa portion la plus amont, il s'agit d'un air encore très froid qui vient refroidir le circuit d'huile. D'autre part, les ailettes constituent une zone d'échange thermique présentant une grande surface d'échange et ne perturbant que très faiblement le flux d'air, et uniquement le flux d'air secondaire.

Cette solution présente l'avantage supplémentaire de réaliser, outre le refroidissement du circuit d'huile, le dégivrage du bec séparateur. En effet, l'échangeur air-huile selon l'invention forme un dispositif anti- givrage du bec séparateur et des aubages d'entrée du flux primaire (IGV pour « inlet guide vanes ») situées sous la partie inférieure du bec séparateur, par les calories apportées par le circuit d'huile au niveau de la partie avant du bec séparateur.

Ainsi, la présente invention porte également sur l'utilisation de l'échangeur air-huile du type précité pour le dégivrage du bec séparateur.

Il faut noter que puisque l'échangeur air-huile selon l'invention est situé en aval de la soufflante et dans la partie située vers l'intérieur de la veine secondaire, il ne risque pratiquement pas d'être endommagé par les objets extérieurs qui pénètrent dans le turboréacteur, la soufflante absorbant ce choc et dans son mouvement de rotation brisant en petits éclats ces objets, qui se trouvent ainsi entraînés par la force centrifuge en aval de la soufflante et vers l'extérieur de la veine secondaire.

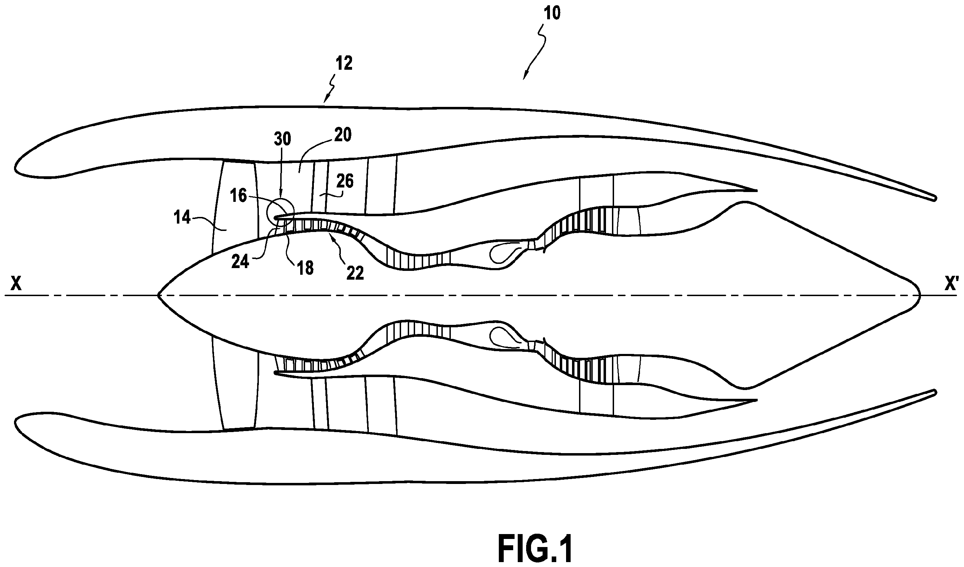

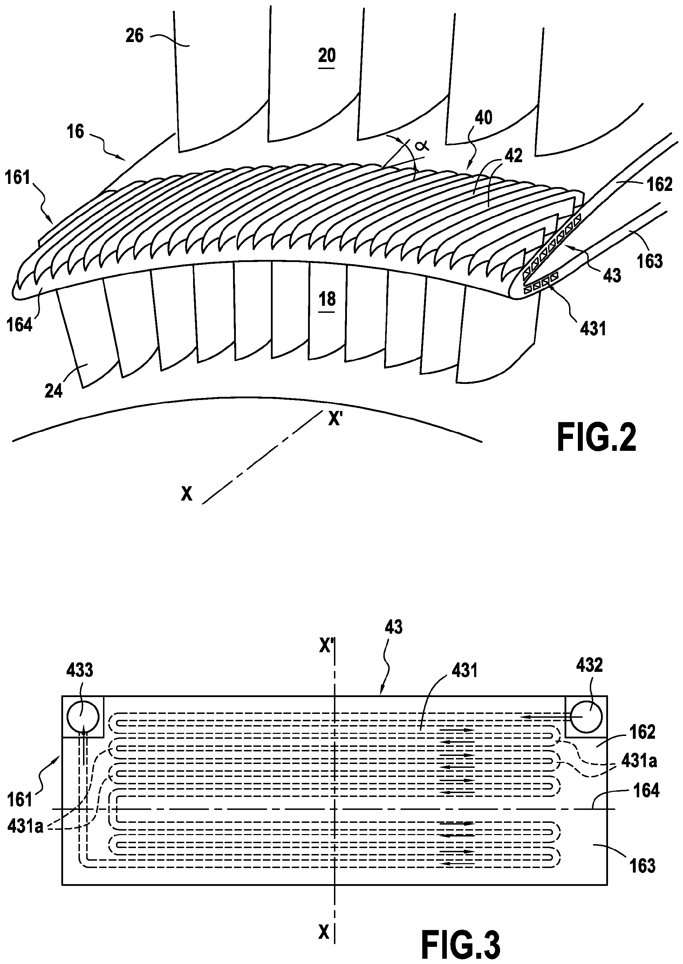

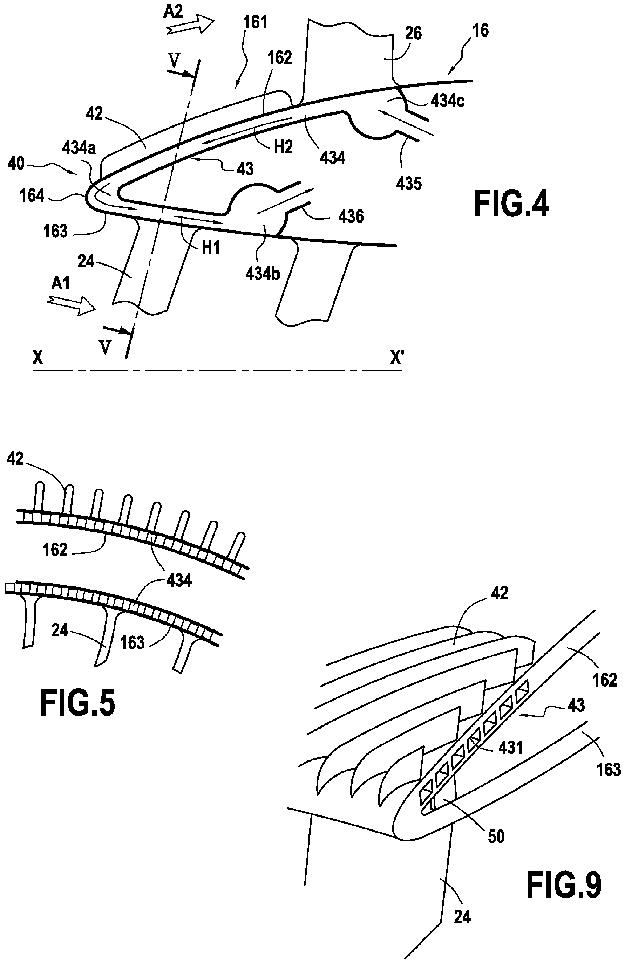

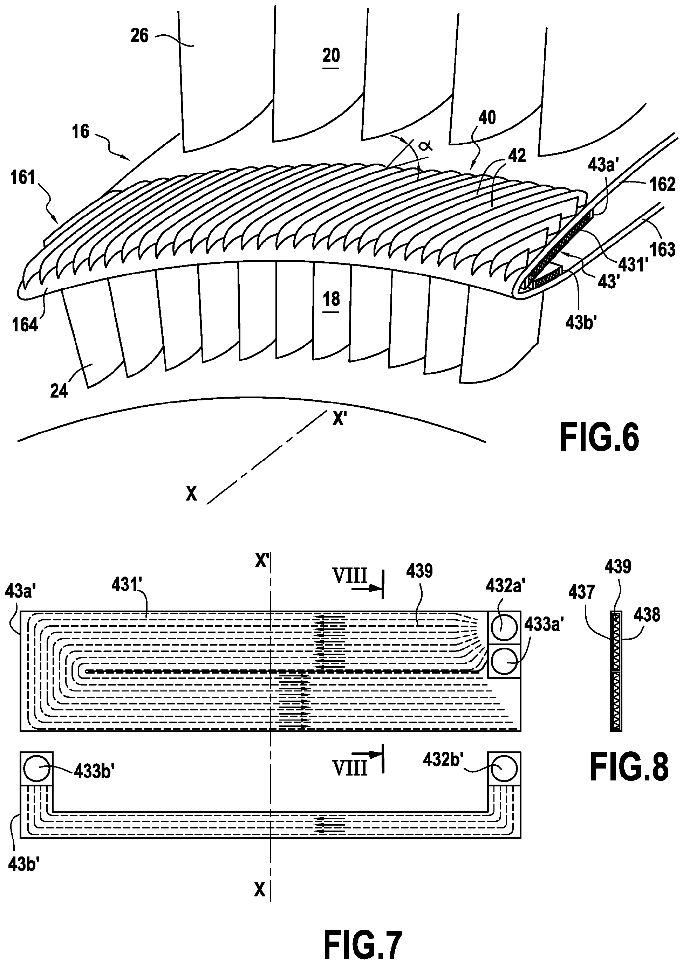

D'autres avantages et caractéristiques de l'invention ressortiront à la lecture de la description suivante faite à titre d'exemple et en référence aux dessins annexés dans lesquels : - la figure 1 est une vue générale en coupe d'un turboréacteur situant l'emplacement de l'échangeur air-huile selon l'invention, - la figure 2 est une vue en perspective partielle d'une section angulaire de l'échangeur air-huile selon l'invention selon un premier mode de réalisation - la figure 3 est une vue de la partie avant du bec séparateur de la figure 2, dans une configuration déployée permettant de visualiser le circuit d'huile par transparence, -la figure 4 est une demi-coupe radiale de la partie avant du bec séparateur selon une variante de réalisation du premier mode de réalisation, - la figure 5 est une coupe partielle d'une section angulaire de l'échangeur air-huile selon la direction V-V de la figure 4, - les figures 6 et 7 sont des vues similaires aux figures 2 et 3 pour un deuxième mode de réalisation de l'échangeur air-huile selon l'invention, - la figure 8 est une vue en coupe selon la direction VIII-VIII de la figure 7, et - la figure 9 est une vue similaire à celle de la figure 2 pour un troisième mode de réalisation de l'échangeur air-huile selon l'invention.

Si l'on se reporte à la figure 1, un turboréacteur 10 est représenté de façon très schématique. La nacelle 12 sert d'enveloppe extérieure aux différents organes, parmi lesquels, à l'avant (à gauche sur la figure 1) la soufflante 14.

En aval de la soufflante 14, le flux d'air est séparé par le bec séparateur 16 en un flux d'air primaire et en un flux d'air secondaire. Le flux d'air primaire parcourt un passage d'air annulaire interne ou veine primaire 18 en pénétrant dans le compresseur basse pression 22 au niveau des aubes directrices d'entrée 24 (IGV pour « inlet guide vanes »). Le flux d'air secondaire est dévié par le bec séparateur 16 dans un passage d'air annulaire externe 20 (veine secondaire) en direction des aubes directrices de sortie 26 (OGV pour « outlet guide vanes ») puis vers la sortie du moteur.

Dans la suite de la description, on décrit plus en détail différents modes de réalisation de l'échangeur air-huile selon l'invention qui est disposé dans la zone 30 de la figure 1, comprenant la partie avant 161 du bec séparateur 16.

Sur la figure 2, on visualise de façon plus précise la partie avant 161 du bec séparateur 16 comprenant le bord d'attaque 164 situé le plus en amont et au niveau duquel la paroi supérieure 162 du bec séparateur 16 rejoint la paroi inférieure 163 du bec séparateur 16, la paroi supérieure 162 formant la virole intérieure de la veine secondaire 20.

Le terme « supérieur » désigne en fait tout élément situé vers l'extérieur sur un axe radial ayant pour origine l'axe X-X' du turbo réacteur 10 et le terme « inférieur » désigne tout élément situé vers l'intérieur sur un axe radial ayant pour origine l'axe X-X' du turbo réacteur 10.

Les termes « amont » et « aval » se rapportent à des positions axiales le long de l'axe X-X' dans le sens de l'écoulement du flux d'air dans le turboréacteur 10.

Le bec séparateur 16 est creux, la face supérieure de la paroi supérieure 162 servant de limite radialement interne au passage d'air annulaire externe 20 recevant le flux secondaire tandis que la face inférieure de la paroi inférieure 163 sert de limite radialement externe au passage d'air annulaire interne 18 recevant le flux primaire.

La paroi inférieure 163 du bec séparateur 16 forme la virole extérieure du compresseur basse pression 22.

Il existe un décalage axial vers l'aval des aubes directrices de sortie 26 par rapport au bord d'attaque 164 du bec séparateur 16, de sorte que classiquement la face supérieure de la paroi supérieure 162 est dégagée dans la portion de la partie avant 161 directement adjacente au bord d'attaque 164 du bec séparateur 16.

C'est dans cette portion de la partie avant 161 directement adjacente au bord d'attaque 164 du bec séparateur 16, située dans la zone 30 localisée sur la vue générale de la figure 1, que se trouve l'échangeur air-huile 40 selon l'invention.

Sur les figures 2 et 3, l'échangeur air-huile 40 se compose d'une part d'ailettes 42 et d'autre part d'un circuit d'huile 43.

Les ailettes 42 sont des ailettes fines de ventilation disposées sur la face extérieure de la paroi supérieure 162 du bec séparateur 16. Les ailettes 42 sont des lamelles fines parallèles entre elles qui s'étendent sensiblement depuis le bord d'attaque 164 du bec séparateur 16 jusqu'aux aubes directrices de sortie 26, ou, dans un cas non revendiqué et ne faisant pas partie de l'invention, légèrement en retrait des aubes directrices de sortie 26 (caractéristique reportée à des fins purement illustratives sur la figure 2 sans que le reste de ladite outrepasse les revendications).

Ces ailettes 42 présentent une étendue radiale très limitée, ce qui, combiné à leur faible épaisseur et à leur espacement contribue à très peu perturber le flux secondaire à l'emplacement où il pénètre dans le passage d'air annulaire externe 20.

Les ailettes 42 peuvent être parallèles à l'axe X-X'.

Cependant, de préférence, les ailettes 42 ne sont pas parallèles à l'axe X-X' et elles sont orientées selon un angle α aigu, de préférence compris entre 40° et 50° par rapport à l'axe (X-X') du turboréacteur 10. En fait, on positionne avantageusement les ailettes 42 parallèlement à la direction du flux d'air à cet endroit, lequel flux d'air a été orienté par un angle de rotation engendré par la soufflante 14.

Cet angle α permet de limiter l'impact sur le flux d'air et de maximiser le débit d'air passant entre les ailettes 42 .

Ces ailettes 42 sont par exemple des lamelles d'aluminium rapportées par brasage sur la face supérieure la paroi supérieure 162 du bec séparateur 16. Typiquement, on utilise des ailettes de 1 à 2 mm d'épaisseur, séparées entre elles de 2 à 8 mm et présentant une hauteur (en direction radiale) de 10 à 20 mm.

Ces ailettes 42 recevant l'air le plus froid car le plus en amont du flux d'air secondaire, elles bénéficient des meilleures conditions pour réaliser le refroidissement de la paroi supérieure 162 du bec séparateur 16 au niveau de laquelle se trouve au moins une partie du circuit d'huile.

En effet, selon l'invention, on prévoit que le circuit d'huile 43 est en contact au moins avec la paroi supérieure 162 du bec séparateur 16, et ceci afin de bénéficier du refroidissement de la paroi supérieure 162 par les ailettes 42.

Afin de renforcer le refroidissement du circuit d'huile en étendant les surfaces d'échange, et de dégivrer les aubes directrices d'entrée (IGV) 24, on prévoit en outre, de préférence que le circuit d'huile 43 est également en contact avec la paroi inférieure 163 du bec séparateur 16.

Selon le premier mode de réalisation visible plus en détails sur la figure 2, le circuit d'huile 43 passe à l'intérieur de la paroi supérieure 162 du bec séparateur 16 et à l'intérieur de la paroi inférieure 163 du bec séparateur 16.

En effet, selon ce premier mode de réalisation, le circuit d'huile 43 forme un serpentin disposé à l'intérieur de la paroi supérieure 162 et de la paroi inférieure 163 du bec séparateur 16.

Dans la configuration représentée sur les figures 2 et 3, le circuit d'huile 43 parcourt la partie avant 161 du bec séparateur 16 de façon essentiellement circonférentielle avec des tronçons 431 du circuit d'huile 43 annulaires autour de l'axe (X-X') du turboréacteur et parallèles entre eux. Ces tronçons 431 circonférentiels quasi annulaires sont reliés entre eux par des coudes 431a (voir la figure 3) de sorte que l'écoulement de l'huile s'effectue d'un tronçon 431 du circuit d'huile 43 à l'autre dans le sens contraire du flux d'air secondaire.

Ces tronçons 431 du circuit d'huile 43 sont par exemple des canaux creusés dans la paroi supérieure 162 et dans la paroi inférieure 163.

Alternativement, ces canaux peuvent aussi être constitués (voir figure 8) par l'espace délimité entre deux plaques d'un empilement de trois plaques comportant deux plaques parallèles 437 et 438 légèrement écartées entre lesquelles une troisième plaque 439 ondulée est logée en étant reliée de façon étanche, par chaque ligne formant le sommet de toutes les ondulations, aux deux plaques parallèles 437 et 438. Une telle structure, de type sandwich présente l'avantage d'être légère et résistante mécaniquement. En outre en utilisant des plaques 437, 438 et 439 très fines, on améliore les échanges thermiques.

Un tel agencement de plaques 437, 438 et 439 peut constituer, à lui seul, les parois de la zone de la partie avant 161 du bec séparateur (paroi supérieure 162 seule ou à la fois la paroi supérieure 162 et la paroi inférieure 163). Alternativement, l'ensemble des plaques 437, 438 et 439 peut être logé dans un espace dédiée dans la paroi supérieure 162 (et éventuellement dans la paroi inférieure 163) par exemple entre deux autres plaques ou tôles constituant la paroi concernée (162 et éventuellement 163).

Le circuit d'huile 43 (voir la figure 3) de l'échangeur air-huile 40 présente une entrée 432 et une sortie 433 directement en communication de liquide avec le circuit d'huile général du moteur (non représenté).

En relation avec les figures 4 et 5, on présente une variante de réalisation du premier mode de réalisation pour laquelle le circuit d'huile 43 ne présente plus une configuration de circulation d'huile circonférentielle mais il présente une configuration de circulation d'huile axiale : en effet, dans ce cas, le circuit d'huile 43 parcourt la partie avant 161 du bec séparateur 16 de façon axiale avec des tronçons de circuit d'huile 434 parallèles entre eux et à l'axe (X-X') du turboréacteur 10.

La situation représentée sur les figures 4 et 5 correspond à un parcours de chaque tronçon de circuit d'huile 434 qui s'étend axialement à la fois dans la paroi supérieure 162 et dans la paroi inférieure 163 de part et d'autre du coude 434a.

Selon une alternative non représentée de cette variante « axiale » du premier mode de réalisation, on peut prévoir, pour le circuit d'huile 43, un parcours qui se limiterait à la paroi supérieure 162 du bec séparateur 16. Une telle configuration permet aussi un refroidissement efficace de l'huile circulant au niveau de la paroi supérieure 162 grâce à l'échange thermique important avec les ailettes 42 situées sur la face supérieure de la paroi supérieure 162. De plus, dans ce cas, il existe des échanges thermiques entre la paroi supérieure 162 et la paroi inférieure 163 via la paroi du bord d'attaque 164 du bec séparateur 16

Il faut noter que dans cette configuration axiale des tronçons de circuit d'huile 434, la circulation de l'huile dans le circuit d'huile est soit dans le sens inverse par rapport au flux d'air (c'est le cas sur la figure 4, dans la partie du circuit d'huile qui parcourt la paroi supérieure 162 du bec séparateur, avec les deux flèches opposées H2 et A2), soit dans le même sens que le flux d'air ( c'est le cas sur la figure 4, dans la partie du circuit d'huile qui parcourt la paroi inférieure 163 du bec séparateur, avec les deux flèches H1 et A1 dans le même sens).

Le mode de réalisation illustré sur les figures 4 et 5 correspond à un agencement de circuit d'huile dans lequel chacun des tronçons de circuit d'huile 434 est individuellement alimenté, par un collecteur commun d'entrée torique 435 relié à l'extrémité supérieure 434c du tronçon de circuit d'huile 434, et se déverse individuellement dans un
collecteur commun de sortie torique 436 relié à l'extrémité inférieure 434b du tronçon de circuit d'huile 434 (voir figure 4).

Plutôt que des tronçons de circuit d'huile 434 alimentés individuellement, on peut réaliser, en variante (non représentée) un serpentin par le fait qu'un coude relie l'un à l'autre deux tronçons de circuit d'huile 434 dirigés axialement et voisins, alternativement au niveau de l'extrémité inférieure 434b et de l'extrémité supérieure 434c des tronçons de circuit d'huile 434 dirigés axialement. Ainsi, dans ce cas, l'ensemble des tronçons 434 dirigés axialement constituent un circuit d'huile 43 en forme de serpentin.

Si l'on se rapporte aux figures 6 à 8 représentant un deuxième mode de réalisation de l'échangeur air-huile 40, les différences par rapport au premier mode de réalisation de l'échangeur air-huile décrit précédemment en relation avec les figures 2 à 4 sont les suivantes. Au lieu de disposer le circuit d'huile 43 à l'intérieur de la paroi supérieure 162 (et éventuellement à l'intérieur de la paroi inférieure 163) de la partie avant 161 du bec séparateur 16, de façon intégrée, on dispose le circuit d'huile 43' à l'extérieur de la paroi supérieure 162 et, le cas échéant, de la paroi inférieure 163, toujours à l'intérieur de la partie avant 161 du bec séparateur 16.

Dans le cadre du deuxième mode de réalisation les ailettes 42 sont inchangées et identiques à celles du premier mode de réalisation.

Sur les figures 6 et 7, le circuit d'huile 43' comporte un premier boîtier 43a' de circulation d'huile et un deuxième boîtier 43b' de circulation d'huile.

Le premier boîtier 43a' de circulation d'huile est monté à l'intérieur de la partie avant 161 du bec séparateur 16, en étant fixé contre la face inférieure de la paroi supérieure 162.

Le deuxième boîtier 43b' de circulation d'huile est monté à l'intérieur de la partie avant 161 du bec séparateur 16, en étant fixé contre la face supérieure de la paroi inférieure 163.

Le premier boîtier 43a' et le deuxième boîtier 43b' de circulation d'huile sont annulaires et s'étendent sur toute l'étendue circonférentielle de la partie avant 161 du bec séparateur 16.

En direction axiale le long de l'axe X-X', le premier boîtier 43a' de circulation d'huile s'étend au moins tout le long des ailettes 42. Le deuxième boîtier peut présenter une étendue axiale moindre, mais il est avantageusement placé le plus près possible du bord d'attaque 164 du bec séparateur 16 afin de profiter du flux d'air primaire dans la portion la plus froide et également être au plus près du premier boîtier 43a' de circulation d'huile, permettant ainsi des échanges thermiques entre les boîtiers 43a' et 43b' via la paroi du bord d'attaque 164 du bec séparateur 16.

Le premier boîtier 43a' et le deuxième boîtier 43b' de circulation d'huile contiennent des tronçons de circuit d'huile 431' qui sont annulaires sur l'exemple illustré sur les figures 6 à 8, mais, selon une variante non représentée, ces tronçons 431' peuvent être axiaux (configuration « axiale » telle que décrite précédemment).

Selon un exemple de construction, comme il est illustré sur les figures 6 à 8, le premier boîtier 43a' et le deuxième boîtier 43b' de circulation d'huile sont constitués (voir figure 8) d'un empilement de trois plaques comportant deux plaques parallèles 437 et 438 légèrement écartées entre lesquelles une troisième plaque 439 ondulée est logée en étant reliée de façon étanche par chaque ligne formant le sommet de toutes les ondulations aux deux plaques parallèles 437 et 438. Une telle structure, de type sandwich, présente l'avantage d'être légère et résistante mécaniquement.

Dans ce cas, l'espace délimité entre l'une parmi les plaques 437 et 438 et la plaque ondulée 439, forme les tronçons de circuit d'huile 431' qui présentent une grande surface de circulation et d'échange thermique pour un faible encombrement.

Comme il ressort de la figure 7 représentant les deux boîtiers 43a' et 43b', le bec séparateur 16 ayant été omis, il est prévu que chaque boîtier 43a' (43b') présente une entrée 432a' (432b') et une sortie 433a' (433b') directement en communication de liquide avec le circuit d'huile général du moteur.

Selon une autre variante de ce deuxième mode de réalisation, non représentée, on utilise seulement le premier boîtier 43a' de circulation d'huile.

Selon la variante de réalisation du premier mode de réalisation ou du deuxième mode de réalisation, pour laquelle le circuit d'huile n'est présent qu'au niveau de la paroi supérieure 162 du bec séparateur 16, on peut prévoir, comme il est illustré sur la figure 9 pour le premier mode de réalisation, que l'échangeur air-huile 40 comporte en outre un pont thermique 50 relie la paroi supérieure 162 et la paroi inférieure 163 de la partie avant 161 du bec séparateur 16.

Sur la figure 9, ce pont thermique 50 est une lame reliant la face inférieure de la paroi supérieure 162, dans la zone du circuit d'huile, à la face supérieure de la paroi inférieure 163. Le pont thermique 50 est réalisé dans un ou plusieurs matériau(x) bons conducteurs de la chaleur, tels que l'aluminium.

De ce fait, il existe un meilleur transfert thermique entre la paroi supérieure 162 et la paroi inférieure 163 de la partie avant 161 du bec séparateur 16, grâce à la conduction thermique réalisée par le pont thermique depuis le circuit d'huile de la paroi supérieure 162, ce qui permet de réchauffer plus facilement la paroi inférieure 163 en vue de son dégivrage.

Ce pont thermique peut alternativement être formé par le fait que le bord d'attaque 164 du bec séparateur est plein sur une certaine étendue axiale, ce qui permet de réaliser au niveau du bord d'attaque 164 une liaison continue entre la paroi supérieure 162 et la paroi inférieure 163 de la partie avant 161 du bec séparateur 16.

Que ce soit pour le premier mode de réalisation dans lequel le circuit d'huile 43 est intégré dans les parois 162 et 163, ou pour le deuxième mode de réalisation pour lequel le circuit d'huile 43' est rapporté contre les parois 162 et 163, on peut prévoir une mise en oeuvre avec des pièces continues et annulaires (circuit d'huile monobloc) ou avec des pièces formant des secteurs angulaires et assemblées entre elles pour recouvrir les 360° à la façon d'une coque segmentée.

Egalement, dans le cas du premier mode de réalisation ou du deuxième mode de réalisation, le circuit d'huile 43 ou 43' peut former un seul circuit s'étendant sur toute la circonférence du bec séparateur 16 ou bien être formé de plusieurs circuits secondaires s'étendant chacun sur un secteur angulaire et alimentés et évacués individuellement séparément les un des autres.

On relève que le positionnement des ailettes 42 à l'entrée du passage d'air annulaire externe 20 contribue, même modestement à l'échauffement du flux secondaire, ce qui va augmenter l'énergie de ce flux secondaire et donc tendre à améliorer les performances du moteur.

Egalement, on note que l'échangeur de chaleur air-huile est placé dans la partie avant 161 du bec séparateur 16, dans la zone 30 de la figure 1, qui est un emplacement dépourvu de dispositif d'amortissement acoustique tel que des panneaux d'amortissement acoustique. Cependant, on doit constater que du fait de la configuration de l'échangeur de chaleur air-huile selon l'invention, à savoir la géométrie du circuit d'huile et la présence d'huile, il constitue une résistance à la propagation des ondes acoustiques et remplit de ce fait également une fonction d'amortissement acoustique.

## Revendications

1. Echangeur air-huile (40) pour un turboréacteur (10) ayant des bras de maintien ainsi qu'une soufflante (14), en aval de laquelle le flux d'air est séparé par un bec séparateur (16) en un flux d'air primaire et un flux d'air secondaire dévié par le bec séparateur dans une veine secondaire (20), l'échangeur étant disposé sur la virole intérieure (162) de la veine secondaire (20) du turboréacteur (10) et comprenant un circuit d'huile (43 ; 43') disposé à l'intérieur du bec séparateur (16), **caractérisé en ce qu'**il comporte des ailettes (42) disposées à l'extérieur de la paroi supérieure, c'est-à-dire externe, (162) du bec séparateur (16), entre le bord d'attaque (164) du bec séparateur (16) et des aubes directrices de sortie (26) d'aubages redresseurs (OGV) du flux d'air secondaire, de façon à ce que les ailettes (42) s'étendent sensiblement jusqu'aux aubes directrices de sortie (26).

2. Echangeur air-huile (40) selon la revendication 1, **caractérisé en ce qu'**il est disposé au niveau de la partie avant (161) du bec séparateur (16).

3. Echangeur air-huile (40) selon l'une quelconque des revendications précédentes, **caractérisé en ce que** les ailettes (42) sont orientées selon un angle α aigu, de préférence entre 40° et 50°, par rapport à l'axe (X-X') du turboréacteur (10).

4. Echangeur air-huile (40) selon l'une quelconque des revendications précédentes, **caractérisé en ce que** le circuit d'huile (43 ; 43') est en contact au moins avec la paroi supérieure (162) du bec séparateur (16).

5. Echangeur air-huile (40) selon la revendication 4, **caractérisé en ce que** le circuit d'huile (43 ; 43') est également en contact avec la paroi inférieure (163) du bec séparateur (16).

6. Echangeur air-huile (40) selon l'une quelconque des revendications précédentes, **caractérisé en ce que** le circuit d'huile (43) passe à l'intérieur de la paroi supérieure (162) du bec séparateur (16).

7. Echangeur air-huile (40) selon la revendication 6, **caractérisé en ce que** le circuit d'huile (43) passe également à l'intérieur de la paroi inférieure (163) du bec séparateur (16).

8. Echangeur air-huile (40) selon l'une quelconque des revendications précédentes, **caractérisé en ce que** le circuit d'huile (43 ; 43') parcourt le bec séparateur (16) de façon essentiellement circonférentielle avec des tronçons de circuit d'huile annulaires (431) autour de l'axe (X-X') du turboréacteur et parallèles entre eux.

9. Echangeur air-huile (40) selon l'une quelconque des revendications précédentes, **caractérisé en ce que** le circuit d'huile (43) parcourt le bec séparateur (16) de façon axiale avec des tronçons de circuit d'huile (434) parallèles entre eux et à l'axe (X-X') du turboréacteur (10).

10. Echangeur air-huile (40) selon l'une quelconque des revendications précédentes, **caractérisé en ce que** le circuit d'huile (43 ou 43') est formé de plusieurs circuits secondaires s'étendant chacun sur un secteur angulaire et alimentés et évacués individuellement séparément les uns des autres.

11. Echangeur air-huile (40) selon l'une quelconque des revendications précédentes, **caractérisé en ce qu'**il comporte en outre un pont thermique (50) reliant la paroi supérieure (162) et la paroi inférieure (163) du bec séparateur (16).

12. Echangeur air-huile (40) selon l'une quelconque des revendications précédentes, **caractérisé en ce que** le circuit d'huile (43') est rapporté contre les parois (162, 163) du bec séparateur (16).

13. Echangeur air-huile (40) selon les revendications 4 et 12, **caractérisé en ce que** le circuit d'huile (43') comporte un premier boîtier de circulation d'huile (43a') fixé contre la face inférieure de la paroi supérieure (162) et qui s'étend au moins tout le long des ailettes (42).

14. Echangeur air-huile (40) selon l'une quelconque des revendications précédentes, **caractérisé en ce que** le circuit d'huile (43 ou 43') est formé avec des pièces formant des secteurs angulaires et assemblées entre elles pour recouvrir 360°.

15. Echangeur air-huile (40) selon l'une quelconque des revendications précédentes, **caractérisé en ce qu'**il est disposé dans une zone s'étendant jusqu'aux bras de maintien.

16. Turbo réacteur (10) comportant un échangeur air-huile (40) selon l'une quelconque des revendications 1 à 15 servant au refroidissement de l'huile de lubrification du moteur et/ou de l'huile de refroidissement des équipements.

17. Utilisation d'un échangeur air-huile (40) selon l'une quelconque des revendications 1 à 15 pour le dégivrage du bec séparateur (16).

## Patentansprüche

1. Luft-Öl-Tauscher (40) für ein Turbostrahltriebwerk (10) mit Haltearmen sowie einem Gebläse (14), stromabwärts dessen der Luftstrom durch einen Trennschnabel (16) in einen primären Luftstrom und einen sekundären Luftstrom, welcher durch den Trennschnabel in einen Sekundärkanal (20) umgeleitet wird, getrennt wird, wobei der Tauscher auf dem Innenring (162) des Sekundärkanals (20) des Turbostrahltriebwerks (10) angeordnet ist und einen Ölkreis (43; 43'), welcher innerhalb des Trennschnabels (16) angeordnet ist, umfasst,
**dadurch gekennzeichnet, dass** er Rippen (42) umfasst, die außerhalb der oberen, das heißt äußeren Wand (162) des Trennschnabels (16) zwischen der Vorderkante (164) des Trennschnabels (16) und Austrittsleitschaufeln (26) von Leitbeschaufelungen (OGV) des sekundären Luftstroms angeordnet sind, so dass die Rippen (42) sich im Wesentlichen bis zu den Austrittsleitschaufeln (26) erstrecken.

2. Luft-Öl-Tauscher (40) nach Anspruch 1, **dadurch gekennzeichnet, dass** er im Bereich des vorderen Teils (161) des Trennschnabels (16) angeordnet ist.

3. Luft-Öl-Tauscher (40) nach einem der vorhergehenden Ansprüche, **dadurch gekennzeichnet, dass** die Rippen (42) unter einem spitzen Winkel (α), vorzugsweise zwischen 40° und 50°, gegenüber der Achse (X-X') des Turbostrahltriebwerks (10) ausgerichtet sind.

4. Luft-Öl-Tauscher (40) nach einem der vorhergehenden Ansprüche, **dadurch gekennzeichnet, dass** der Ölkreis (43; 43') wenigstens mit der oberen Wand (162) des Trennschnabels (16) in Kontakt ist.

5. Luft-ÖI-Tauscher (40) nach Anspruch 4, **dadurch gekennzeichnet, dass** der Ölkreis (43; 43') auch mit der unteren Wand (163) des Trennschnabels (16) in Kontakt ist.

6. Luft-Öl-Tauscher (40) nach einem der vorhergehenden Ansprüche, **dadurch gekennzeichnet, dass** der Ölkreis (43) innerhalb der oberen Wand (162) des Trennschnabels (16) verläuft.

7. Luft-Öl-Tauscher (40) nach Anspruch 6, **dadurch gekennzeichnet, dass** der Ölkreis (43) auch innerhalb der unteren Wand (163) des Trennschnabels (16) verläuft.

8. Luft-Öl-Tauscher (40) nach einem der vorhergehenden Ansprüche, **dadurch gekennzeichnet, dass** der Ölkreis (43; 43') den Trennschnabel (16) im Wesentlichen in Umfangsrichtung durchzieht, mit ringförmigen Ölkreisabschnitten (431) um die Achse (X-X') des Turbostrahltriebwerks herum und parallel zueinander.

9. Luft-Öi-Tauscher (40) nach einem der vorhergehenden Ansprüche, **dadurch gekennzeichnet, dass** der Ölkreis (43) den Trennschnabel (16) axial durchzieht, mit Ölkreisabschnitten (434) parallel zueinander und zu der Achse (X-X') des Turbostrahltriebwerks (10).

10. Luft-Öl-Tauscher (40) nach einem der vorhergehenden Ansprüche, **dadurch gekennzeichnet, dass** der Ölkreis (43 oder 43') von mehreren Sekundärkreisen, die sich jeweils über einen Winkelsektor erstrecken und einzeln getrennt voneinander beaufschlagt und entleert werden, gebildet ist.

11. Luft-Öl-Tauscher (40) nach einem der vorhergehenden Ansprüche, **dadurch gekennzeichnet, dass** er ferner eine Wärmebrücke (50), welche die obere Wand (162) und die untere Wand (163) des Trennschnabels (16) verbindet, umfasst.

12. Luft-Öl-Tauscher (40) nach einem der vorhergehenden Ansprüche, **dadurch gekennzeichnet, dass** der Ölkreis (43') an die Wände (162, 163) des Trennschnabels (16) angesetzt ist.

13. Luft-Öl-Tauscher (40) nach den Ansprüchen 4 und 12, **dadurch gekennzeichnet, dass** der Ölkreis (43') ein erstes Ölzirkulationsgehäuse (43a') umfasst, das an der Unterseite der oberen Wand (162) befestigt ist und das sich wenigstens entlang der ganzen Rippen (42) erstreckt.

14. Luft-Öl-Tauscher (40) nach einem der vorhergehenden Ansprüche, **dadurch gekennzeichnet, dass** der Ölkreis (43 oder 43') mit Teilen gebildet ist, die Winkelsektoren bilden und untereinander verbunden sind, um 360° abzudecken.

15. Luft-Öl-Tauscher (40) nach einem der vorhergehenden Ansprüche, **dadurch gekennzeichnet, dass** er in einem sich bis zu den Haltearmen erstreckenden Bereich angeordnet ist.

16. Turbostrahltriebwerk (10), das einen Luft-Öl-Tauscher (40) nach einem der Ansprüche 1 bis 15 umfasst, welcher der Kühlung des Öls zur Schmierung des Triebwerks und/oder des Öls zur Kühlung der Einrichtungen dient.

17. Verwendung eines Luft-Öl-Tauschers (40) nach einem der Ansprüche 1 bis 15, für die Enteisung des Trennschnabels (16).

## Claims

1. An air-oil heat exchanger (40) for a turbojet (10) having support struts and a fan (14), downstream from which the flow of air is separated by a separator nose (16) into a primary air flow and a secondary air flow deflected by the separator nose into a secondary duct (20), the exchanger being positioned on the inner shroud (162) of the secondary duct (20) of the turbojet (10) and comprising an oil circuit (43; 43') positioned inside the separator nose (16),
**characterized in that** it includes fins (42) placed outside the top, i.e., outer, wall (162) of the separator nose (16), between the leading edge (164) of the separator nose (16) and the outlet guide vanes (OGV) (26) of the secondary air flow, such that the fins (42) extend substantially up to the outlet guide vanes (26).

2. The air-oil heat exchanger (40) according to claim 1, **characterized in that** it is located in the front portion (161) of the separator nose (16).

3. The air-oil heat exchanger (40) according to either preceding claim, **characterized in that** the fins (42) are oriented at an acute angle (α), preferably lying in the range 40° to 50°, relative to the axis (X-X') of the turbojet (10).

4. The air-oil heat exchanger (40) according to any preceding claim, **characterized in that** the oil circuit (43; 43') is in contact at least with the top wall (162) of the separator nose (16).

5. The air-oil heat exchanger (40) according to claim 4, **characterized in that** the oil circuit (43; 43') is also in contact with the bottom wall (163) of the separator nose (16).

6. The air-oil heat exchanger (40) according to any preceding claim, **characterized in that** the oil circuit (43) passes in the thickness of the top wall (162) of the separator nose (16).

7. The air-oil heat exchanger (40) according to claim 6, **characterized in that** the oil circuit (43) also passes in the thickness of the bottom wall (163) of the separator nose (16).

8. The air-oil heat exchanger (40) according to any preceding claim, **characterized in that** the oil circuit (43; 43') runs along the separator nose (16) in essentially circumferential manner with the oil circuit having segments (431) that are annular about the axis (X-X') of the turbojet and mutually parallel.

9. The air-oil heat exchanger (40) according to any preceding claim, **characterized in that** the oil circuit (43) runs along the separator nose (16) in axial manner with oil circuit segments (434) that are parallel to one another and to the axis (X-X') of the turbojet (10).

10. The air-oil heat exchanger (40) according to any preceding claim, **characterized in that** the oil circuit (43 or 43') is made up of a plurality of secondary circuits each extending over an angular sector and individually fed and discharged separately from the others.

11. The air-oil heat exchanger (40) according to any preceding claim, **characterized in that** it further includes a thermal bridge (50) interconnecting the top wall (162) and the bottom wall (163) of the separator nose (16).

12. The air-oil heat exchanger (40) according to any preceding claim, **characterized in that** the oil circuit (43') is fitted against the walls (162, 163) of the separator nose (16).

13. The air-oil heat exchanger (40) according to claims 4 and 12, **characterized in that** the oil circuit (43') comprises a first oil flow unit (43a') fastened against the bottom face of the top wall (162) and extending at least over the entire length of the fins (42).

14. The air-oil heat exchanger (40) according to any preceding claim, **characterized in that** the oil circuit (43 or 43') is built up from parts forming angular sectors that are assembled together to cover 360°.

15. The air-oil heat exchanger (40) according to any preceding claim, **characterized in that** it is located in a zone extending to the support struts.

16. A turbojet (10) including an air-oil heat exchanger (40) according to any one of claims 1 to 15 for cooling lubricating oil of the engine and/or equipment-cooling oil.

17. A use of an air-oil heat exchanger (40) according to any one of claims 1 to 15 for de-icing the separator nose (16).
